Europäisches Patentamt

European Patent Office

Office européen des brevets

(11) Veröffentlichungsnummer : **0 549 875 B1**

(12) **EUROPÄISCHE PATENTSCHRIFT**

(45) Veröffentlichungstag der Patentschrift :
**11.10.95 Patentblatt 95/41**

(21) Anmeldenummer : **92119493.2**

(22) Anmeldetag : **13.11.92**

(51) Int. Cl.⁶ : **G01G 3/14,** G01L 1/22

(51) Int. Cl.⁶ : **G01G 3/14,** G01L 1/22

(54) **Kraftsensor mit Biegering.**

(30) Priorität : **29.11.91 DE 4139439**

(43) Veröffentlichungstag der Anmeldung :
**07.07.93 Patentblatt 93/27**

(45) Bekanntmachung des Hinweises auf die
Patenterteilung :
**11.10.95 Patentblatt 95/41**

(84) Benannte Vertragsstaaten :
**AT BE CH DE ES FR GB IT LI NL SE**

(56) Entgegenhaltungen :
**EP-A- 0 288 985**
**EP-A- 0 351 006**
**DE-C- 3 937 318**
**US-A- 4 836 034**

(73) Patentinhaber : **SIEMENS**
**AKTIENGESELLSCHAFT**
**Wittelsbacherplatz 2**
**D-80333 München (DE)**

(72) Erfinder : **Beetz, Bernhard, Dr.-Ing.**
**Seestrasse 5135**
**W-7460 Balingen (DE)**
Erfinder : **Fritz, Harald, Dr.-Ing.**
**Hebelstrasse 5**
**W-7517 Waldbronn 3 (DE)**

**Beschreibung**

Die Erfindung bezieht sich auf einen Kraftsensor, insbesondere eine Wägezelle, nach dem Oberbegriff des Anspruchs 1 .

Aus der europäischen Patentanmeldung 0 288 985 ist eine Wägezelle bekannt, bei der die eingeleitete Last durch Aufzeichnung der tangentialen Verformungen eines ringförmigen Verformungskörpers gemessen wird, der durch schmale, ringförmige Stege, die als elastische Gelenke wirken, einerseits mit einem Krafteinleitungsteil und andererseits mit einem Trageteil verbunden ist. Zur Aufzeichnung der Verformungen werden die Stauchung bzw. Dehnung von auf gegenüberliegenden Seiten einer Mittelfläche im axialen Abstand voneinander angeordneten Flächen des Rings bei dessen Biegung von mechanisch-elektrischen Wandlerelementen aufgenommen. Als mechanisch-elektrische Wandlerelemente werden vorzugsweise Meßdrahtspiralen eingesetzt, die auf ihrer ganzen Länge mit der oberen bzw. unteren Ringfläche fest verbunden sind. Mit diesen Drahtspiralen werden ausschließlich Tangentialdehnungen auf den Ringstirnflächen erfaßt, auf der Ringoberseite als Stauchung, auf der Ringunterseite als Dehnung. Das hat den Nachteil, daß man für eine Wheatstone-Vollbrücke unbedingt beide Ringseiten mit den positiven und negativen Widerstandsänderungen der Drahtspiralen benötigt. Zudem wirken sich die Verbindungen in der Brücke zwischen Ober- und Unterseite im Fall auftretender Temperaturgradienten negativ auf die Meßgenauigkeit aus.

Der Erfindung liegt die Aufgabe zugrunde, einen Kraftsensor zu schaffen, bei dem die mechanisch-elektrischen Wandlerelemente einer Seite ihre Beschaltung als Vollbrücke ermöglichen.

Zur Lösung dieser Aufgabe weist der neue Kraftsensor der eingangs genannten Art die im kennzeichnenden Teil des Anspruchs 1 genannten Merkmale auf. In den Ansprüchen 2 bis 6 sind vorteilhafte Ausführungsarten der Erfindung angegeben.

Die Erfindung hat den Vorteil, daß durch die einseitige Plazierung der mechanisch-elektrischen Wandlerelemente mit geringem Aufwand Foliendehnungsmeßstreifen für eine kombinierte Auswertung von Radial- und Tangentialdehnungen applizierbar sind. Die Verdrahtung der Meßwiderstände ist wesentlich einfacher, da innerhalb der Brücke erforderliche Verbindungen in das Dehnungsmeßstreifenelement integrierbar sind und somit nicht gesondert verlegt werden müssen. Alle Brückenzweige befinden sich auf der gleichen Seite des Verformungsteils und sind somit den gleichen Temperatureinflüssen ausgesetzt, so daß sich Temperaturschwankungen weniger stark auf das Meßergebnis auswirken. Da die Dehnungsmeßstreifen und die Verbindungsleitungen auf einer Fläche liegen, ist auch eine Ausführung der gesamten Brückenschaltung in Dünnfilmtechnik möglich. Dabei wirkt es sich positiv auf die Meßgenauigkeit aus, daß alle Elemente der Brücke einschließlich der Verbindungen in einem gemeinsamen Prozeß gefertigt werden. Sowohl Folien- als auch Dünnfilmtechnik machen es möglich, Brückenzusatzwiderstände, z. B. zum Abgleich durch Laser- oder Sandstrahltrimmen, beim Brückenfertigungsprozeß zu integrieren. Wenn zusätzlich zur Brücke auf der Oberseite des Verformungsteils auch eine Brückenschaltung auf der Unterseite realisiert wird, ist eine weitere Erhöhung der Meßgenauigkeit erreichbar.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1      ein Schnittbild durch einen Kraftsensor,

Figur 2      eine Plazierung der Dehnungsmeßstreifen,

Figur 3      eine Brückenschaltung mit den Dehnungsmeßstreifen nach Figur 2 und

Figur 4      eine Brückenschaltung mit beidseitig aufgebrachten Dehnungsmeßstreifen.

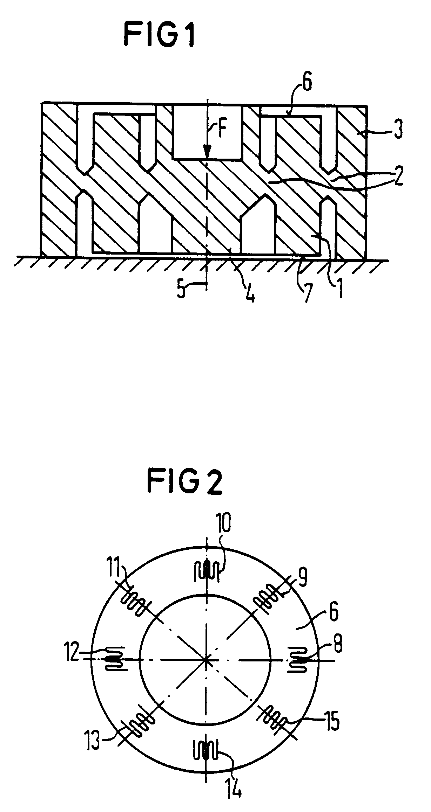

Figur 1 zeigt einen Kraftsensor mit einem Biegering 1 als Verformungsteil, der über zwei wie elastische Gelenke wirkende Verjüngungen 2 mit einem Trageteil 3 und einem Krafteinleitungsteil 4 verbunden ist. Wird der Kraftsensor mit einer zu messenden Kraft F in Richtung der Symmetrieachse 5 belastet, so führt der Biegering 1 eine Kippbewegung aus, die sich auf der Oberseite 6 in einer Radiusverkleinerung und auf der Unterseite 7 in einer Radiusvergrößerung äußert. Bisher wurden auf der Oberseite 6 und der Unterseite 7 des Verformungsteils 1 aufgebrachte mechanisch-elektrische Wandlerelemente zu einer Wheatstone-Vollbrücke verschaltet. An Figur 1 ist leicht zu erkennen, daß diese Verschaltung aufwendig und bei Temperaturschwankungen problematisch ist. Dagegen sind erfindungsgemäß lediglich mechanisch-elektrische Wandlerelemente auf einer Seite, z. B. der Oberseite 6, des Verformungsteils 1 erforderlich, die bereits ein hohes Meßsignal liefern.

Bei dem Applikationsbeispiel für Dehnungsmeßstreifen in Figur 2 werden acht Dehnungsmeßstreifen 8 ... 15 als mechanisch-elektrische Wandlerelemente verwendet. Dabei dienen die Dehnungsmeßstreifen 8, 10, 12 und 14 zur Auswertung radialer Dehnungen und die Dehnungsmeßstreifen 9, 11, 13 und 15 zur Erfassung der tangentialen Stauchungen auf der Oberseite 6 des Verformungsteils. Bei einer derart gewählten Anordnung der Dehnungsmeßstreifen werden Störeinflüsse, wie Querkräfte oder Momente, weitgehend unterdrückt.

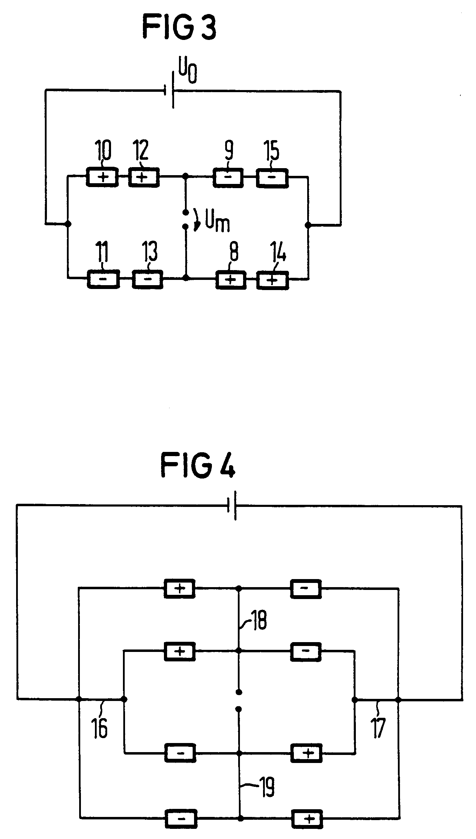

Figur 3 zeigt eine Brückenschaltung, welche die Dehnungsmeßstreifen aus Figur 2 enthält. Sie wird mit einer Betriebsspannung $U_0$ gespeist, so daß am Brückenabgriff eine lastabhängige Meßspannung $U_m$ anliegt. Die Widerstandsänderungen der einzelnen Dehnungsmeßstreifen, deren Bezeichnungen der Plazierung in Figur 2 entsprechen, sind jeweils mit einem eingetragenen Vorzeichen angegeben.

Für erhöhte Genauigkeitsanforderungen können Oberseite 6 und Unterseite 7 des Verformungsteils 1 aus Figur 1 mit Folien- oder Dünnfilmdehnungsmeßstreifen versehen werden. Erfindungsgemäß können nach Figur 4 Dehnungsmeßstreifen der Oberseite und der Unterseite zu vollständigen Einzelbrücken verschaltet werden, die eingangs- und ausgangsseitig mit zusätzlichen Leitungen 16, 17 bzw. 18, 19 verbunden werden. Die Leitungen 16 ... 19 zwischen diesen Brücken sind für die Meßgenauigkeit völlig unkritisch, weil sie lediglich die Eckpunkte der geschlossenen Einzelbrücken miteinander verbinden.

Brückenzusatzwiderstände, z. B. für den Nullabgleich, den Empfindlichkeitsabgleich oder eine Korrektur der Temperaturabhängigkeit von Nullpunkt und Empfindlichkeit, können in der Brückenschaltung in Folien- oder Dünnfilmtechnik integriert werden. Diese Zusatzwiderstände sollten auf Zonen ohne oder mit nur geringer Dehnung untergebracht werden, denn sie sind selbst auch dehnungsempfindlich. Auf den Seiten des Biegerings hängen Tangential- und Radialdehnung über die Querdehnzahl $\nu$ voneinander ab. Es gilt:

$$\nu = -\frac{\varepsilon_r}{\varepsilon_t},$$

wobei $\varepsilon_r$ die radiale Dehnung und $\varepsilon_t$ die tangentiale Dehnung sind. Auf einer Seite weisen daher radiale und tangentiale Dehnung ein unterschiedliches Vorzeichen auf. Zwischen der radialen und tangentialen Orientierung existiert also ein Winkel $\alpha$ zur Tangente, in dessen Richtung keine Längendehnung stattfindet. Dieser Winkel $\alpha$ kann in Abhängigkeit von der Querdehnzahl $\nu$ bestimmt werden zu:

$$\alpha = \frac{1}{2}\arccos\left(\frac{\nu - 1}{\nu + 1}\right).$$

Für Stahl, dessen Querdehnzahl etwa ein Drittel beträgt, müssen demnach Brückenzusatzwiderstände in einem 60°-Winkel zur Tangente orientiert werden, um sie keiner Dehnung auszusetzen.

**Patentansprüche**

1. Kraftsensor, insbesondere Wägezelle, mit einem Krafteinleitungsteil (4) und einem Trageteil (3), die durch schmale, ringförmige Stege (2) mit einem zwischen ihnen angeordneten, ringförmigen Verformungsteil (1) verbunden sind, das auf einer in axialem Abstand zu den Stegen gelegenen Seite (6) erste mechanisch-elektrische Wandlerelemente (9, 11, 13 und 15) zum Umwandeln tangentialer Verformungen in eine erste elektrische Größe aufweist, **dadurch gekennzeichnet**, daß auf derselben Seite (6) zweite mechanisch-elektrische Wandlerelemente (8, 10, 12 und 14) zum Umwandeln radialer Verformungen in eine zweite elektrische Größe vorhanden sind, wobei die erste und die zweite elektrische Größe unterschiedliches Vorzeichen haben.

2. Kraftsensor nach Anspruch 1, **dadurch gekennzeichnet**, daß erste und zweite Wandlerelemente (8 ... 15) elektrisch zu einer Vollbrücke verschaltet sind.

3. Kraftsensor nach Anspruch 1 oder 2, **dadurch gekennzeichnet**, daß erste und zweite Wandlerelemente (8 ... 15) in Folien- oder Dünnfilmtechnik in einem gemeinsamen Prozeß gefertigt sind.

4. Kraftsensor nach Anspruch 2 oder 3, **dadurch gekennzeichnet**, daß auf derselben Seite (6) Brückenzusatzwiderstände vorgesehen sind.

5. Kraftsensor nach Anspruch 4, **dadurch gekennzeichnet**, daß die Brückenzusatzwiderstände derart auf dem Verformungsteil (1) angebracht sind, daß ihre elektrischen Eigenschaften unabhängig von seiner Verformung sind.

6. Kraftsensor nach einem der Ansprüche 2 bis 5, **dadurch gekennzeichnet**, daß das Verformungsteil (1) auf einer zweiten, der ersten (6) in axialem Abstand zu den Stegen (2) gegenüberliegenden Seite (7) weitere mechanisch-elektrische Wandlerelemente aufweist, die zu einer zweiten Vollbrücke verschaltet sind, und daß die beiden Vollbrücken eingangs- und ausgangsseitig derart parallelgeschaltet sind, daß jeweils einem Wandlerelement für tangentiale Verformungen auf der einen Seite ein Wandlerelement für radiale Verformungen auf der anderen Seite parallelliegt und umgekehrt.

### Claims

1. Force sensor, in particular a load cell, having a force induction part (4) and a carrying part (3) which are connected by means of narrow, annular webs (2) to an annular deformation part (1) which is arranged between them and which has, on a side (6) located at an axial distance from the webs, first mechanical/electrical transformer elements (9, 11, 13 and 15) for converting tangential deformations into a first electrical quantity, characterised in that, on the same side (6), second mechanical/electrical transformer elements (8, 10, 12 and 14) are present for converting radial deformations into a second electrical quantity, wherein the first electrical quantity and the second electrical quantity have a different sign.

2. Force sensor according to claim 1, characterised in that first and second transformer elements (8 ... 15) are electrically interconnected to form a full bridge.

3. Force sensor according to claim 1 or 2, characterised in that first and second transformer elements (8 ... 15) are manufactured in a common process using foil or thin film technology.

4. Force sensor according to claim 1 to 3, characterised in that additional bridge resistances are provided on the same side (6).

5. Force sensor according to claim 4, characterised in that the additional bridge resistances are attached to the deformation part (1) in such a way that their electrical properties are independent of its deformation.

6. Force sensor according to one of claims 2 to 5, characterised in that the deformation part (1) has, on a second side (7) located opposite the first side (6) at an axial distance from the webs (2), further mechanical/electrical transformer elements which are interconnected to a form a second full bridge, and in that the two full bridges are connected in parallel on the input side and on the output side in such a way that, in each case, a transformer element for tangential deformations on the one side is parallel with a transformer element for radial deformations on the other side, and vice versa.

### Revendications

1. Capteur de force, notamment cabine de balances, comportant une partie (4) d'application d'une force et une partie (3) de support, qui sont reliées par des anneaux (2) étroits, à une partie (1) annulaire de déformation, qui est disposée entre ces anneaux et qui comporte sur un côté (6), qui est à distance axiale des anneaux, des premiers éléments (9, 11, 13 et 15) transducteurs mécaniques-électriques destinés à convertir des déformations tangentielles en une première grandeur électrique, caractérisé en ce que il est prévu sur le même côté (6) des seconds éléments transducteurs (8, 10, 12 et 14) mécaniques-électriques destinés à convertir des déformations radiales en une seconde grandeur électrique, la première et la seconde grandeur électrique étant de signes différents.

2. Capteur de force suivant la revendication 1, caractérisé en ce que les premier et second éléments transducteurs (8 à 15) sont branchés électriquement pour former un pont intégral.

3. Capteur de force suivant la revendication 1 ou 2, caractérisé en ce que des premier et second éléments transducteurs (8 à 15) sont fabriqués en technique des feuilles ou films minces en une même opération.

4. Capteur de force suivant la revendication 2 ou 3, caractérisé en ce que des résistances supplémentaires de pont sont prévues sur le même côté (6).

5. Capteur de force suivant la revendication 4, caractérisé en ce que les résistances supplémentaires de pont sont mises en place sur la partie (1) de déformation, de telle sorte que leurs propriétés électriques soient indépendantes de sa déformation.

6. Capteur de force suivant l'une des revendications 2 à 5, caractérisé en ce que la partie (1) de déformation comporte sur un second côté (7) en face du premier côté (6) et à distance axiale des anneaux (2) d'autres éléments transducteurs mécaniques-électriques, qui sont branchés pour former un second pont intégral, et les deux ponts intégraux sont branchés en parallèle du côté entrée et du côté sortie de telle sorte qu'un élément transducteur pour les déformations radiales sur l'un des côtés soit en parallèle avec un élément transducteur pour des déformations tangentielles sur l'autre côté et inversement.

# FIG 1

# FIG 2

# FIG 3

# FIG 4